# FASCICULE DE BREVET EUROPEEN

(11) **EP 0 789 442 B1**
(45) Date de publication et mention de la délivrance du brevet: **19.07.2000**
(21) Numéro de dépôt: 97400278.4
(22) Date de dépôt: 07.02.1997
(51) Int. Cl.: H02K 49/04

(54) **Transmission de véhicule équipée d'un ralentisseur électrique**
Fahrzeuggetriebe versehen mit einem elektrischen Retarder
Vehicle transmission equipped with an electric retarder

(30) Priorité: 12.02.1996 FR 9601690
(43) Date de publication de la demande: 13.08.1997
(73) Titulaire: LABINAL, 78180 Montigny le Bretonneux (FR)
(72) Inventeur: Rugraff,Guy, 93500 Pantin (FR)
(74) Mandataire: Burbaud, Eric

(56) Documents cités:
- FR-A- 1 138 752
- FR-A- 1 386 434
- FR-A- 1 455 080

## Description

L'invention est relative aux transmissions pour véhicules terrestres à moteur, c'est-à-dire aux dispositifs transmettant le mouvement de rotation du moteur jusqu'aux roues des véhicules.

Parmi ces transmissions, l'invention concerne plus spécialement celles qui comprennent un arbre rotatif autour d'un axe et un ralentisseur électrique à courants de Foucault qui comporte lui-même un stator inducteur annulaire et un rotor, ce rotor incluant au moins une roue qui est solidaire de l'arbre, laquelle roue comporte une couronne induite qui s'échauffe en subissant des dilatations thermiques pendant le fonctionnement du ralentisseur et qui comprend elle-même un disque induit annulaire en matériau ferromagnétique, ce disque induit étant disposé en regard du stator et étant solidaire d'une pluralité d'aubages formant ailettes de refroidissement, la roue comportant en outre au moins trois bras de fixation qui s'étendent chacun vers l'intérieur depuis une extrémité extérieure solidaire de la couronne induite jusqu'à une extrémité intérieure reliée à l'arbre, chaque bras de fixation étant libre de toute liaison mécanique entre ses extrémités intérieure et extérieure.

Le document FR-A-1 138 752 décrit un exemple d'une telle transmission.

Dans le dispositif décrit par ce document, la déformation thermique radiale du disque induit, sous l'effet des hautes températures atteintes par ce disque induit lors du fonctionnement du ralentisseur, est encaissée exclusivement par déformation des bras de fixation des roues du rotor, les extrémités intérieures de ces bras de fixation étant réunies entre elles rigidement par un moyeu indéformable.

Par conséquent, ces bras de fixation ont soit des formes complexes qui sont difficiles à réaliser, ce qui augmente le coût du ralentisseur électrique, soit des formes simples qui acceptent difficilement les déformations radiales, ce qui augmente les contraintes mécaniques dans le rotor et diminue sa durée de vie.

La présente invention a notamment pour but de pallier ces inconvénients.

A cet effet, selon l'invention, une transmission de véhicule du genre en question est caractérisée en ce que l'extrémité intérieure de chaque bras de fixation est reliée à l'arbre par l'intermédiaire d'une lame métallique qui est aplatie en direction radiale et qui s'étend longitudinalement parallèlement à l'axe de rotation au moins entre d'une part une zone de fixation solidarisée à l'arbre et d'autre part une extrémité libre fixée à ladite extrémité intérieure du bras de fixation considéré, les différentes lames métalliques étant déformables élastiquement en direction radiale lorsque la couronne induite subit des dilatations thermiques.

Grâce à ces dispositions, les bras de fixation des roues du rotor peuvent être conçus de façon à être indéformables ou modérément déformables, puisque les dilatations thermiques des roues du rotor sont absorbées au moins en partie par la déformation élastique des lames métalliques.

Ainsi, les bras de fixation des roues du rotor peuvent présenter des formes plus simples, donc plus faciles à réaliser et moins coûteuses que dans l'art antérieur.

Dans des modes de réalisation préférés, on a recours en outre à l'une et/ou à l'autre des dispositions suivantes :
- chaque bras de fixation présente une certaine largeur parallèlement à l'axe de rotation, et comporte un rétrécissement où cette largeur est réduite ;
- la transmission comprend en outre un tube métallique qui s'étend longitudinalement parallèlement à l'axe de rotation entre deux extrémités et qui est solidaire de l'arbre, les lames métalliques étant découpées axialement à au moins une des extrémités de ce tube, et chaque lame métallique présentant une extrémité axiale solidaire dudit tube : cette disposition permet un montage aisé des lames métalliques sur l'arbre rotatif ;
- la transmission comporte en outre un mécanisme de transmission entraîné par le moteur du véhicule et présentant un carter sur lequel le stator du ralentisseur électrique est monté en porte-à-faux, le mécanisme de transmission incluant également l'arbre susmentionné et cet arbre étant relié à un joint de cardan qui est disposé à l'intérieur du tube, le rotor comportant quant à lui deux roues qui encadrent axialement le stator, les lames métalliques sur lesquelles sont montées ces roues étant découpées aux deux extrémités du tube, l'une des extrémités de ce tube présentant des zones de fixation qui sont disposées angulairement entre les lames métalliques et qui sont fixées à une bride solidaire de l'arbre ;
- le mécanisme de transmission est une boîte de vitesses ;
- les bras de fixation de chaque roue du rotor s'étendent selon un même plan radial ;
- chaque bras de fixation s'étend selon une direction sensiblement radiale ;
- chaque bras de fixation est courbe, de façon à présenter une certaine déformabilité élastique en direction radiale.

Les caractéristiques et avantages de l'invention apparaîtront au cours de la description détaillée suivante de deux de ses formes de réalisation, données à titre d'exemples non limitatifs, en regard des dessins joints.

Sur les dessins :
- la figure 1 est une vue schématique partielle en coupe verticale d'une transmission de véhicule selon une première forme de réalisation de l'invention, le plan de coupe étant localement décalé au niveau de deux vis de fixation de la plaque de fermeture du mécanisme de transmission et au niveau d'une vis de fixation du stator du ralentisseur électrique,
- la figure 2 est une vue schématique selon la direction II de la figure 1, montrant l'ossature qui supporte le stator du ralentisseur électrique,
- la figure 3 est une vue selon la direction III de la figure 1, montrant le rotor du ralentisseur électrique,
- la figure 3A est une vue de détail de la figure 3, en coupe,
- la figure 4 est une vue de détail en coupe axiale d'un tube intercalaire appartenant au rotor du ralentisseur électrique dans la transmission représentée sur la figure 1,
- les figures 5 et 6 sont des vues en bout du tube de la figure 4, respectivement selon les directions V et VI de la figure 4,
- la figure 7 est une vue schématique partielle en coupe verticale d'une transmission de véhicule selon une deuxième forme de réalisation de l'invention, le plan de coupe étant localement décalé au niveau d'une vis de fixation du stator du ralentisseur électrique,
- la figure 8 est une vue selon la direction VIII de la figure 7, montrant le rotor du ralentisseur électrique,
- la figure 9 est une vue similaire à la figure 8, pour une variante du dispositif des figures 7 et 8,
- et les vues 10 et 11 sont des vues partielles similaires respectivement aux figures 1 et 3 pour une variante du dispositif des figures 1 à 6.

Sur les différentes figures, les mêmes références désignent des éléments identiques ou similaires.

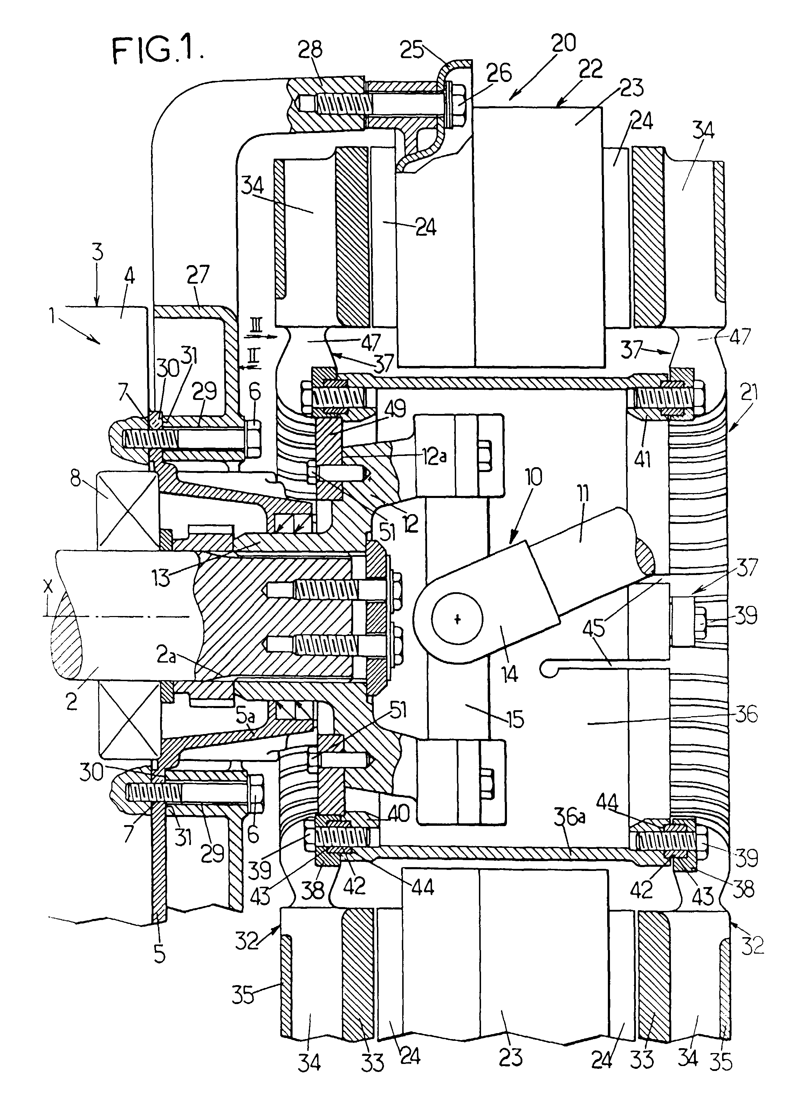

La figure 1 représente une partie d'une transmission selon une première forme de réalisation de l'invention, destinée à équiper un véhicule automobile, notamment poids lourd ou autobus.

Cette transmission comprend :
- une boîte de vitesses 1 entraînée par le moteur du véhicule (non représenté) et présentant un arbre de sortie 2 rotatif autour d'un axe X sensiblement horizontal,
- un joint de cardan 10 qui se trouve dans une position axiale standard, indépendante de la présence ou non d'un ralentisseur électrique, ce joint de cardan étant entraîné par l'arbre de sortie 2 et entraînant lui-même un arbre de liaison 11 qui s'étend en général jusqu'à un deuxième joint de cardan (non représenté) relié à un pont (non représenté), l'une 12 des fourches du joint de cardan 10 étant pourvue d'un manchon 13 cannelé intérieurement qui est emmanché sur l'extrémité de l'arbre de sortie 2, laquelle extrémité est dotée de cannelures extérieures 2a en correspondance avec les cannelures intérieures du manchon 13,
- et un ralentisseur électrique 20 à courants de Foucault monté en porte-à-faux sur la boîte de vitesses 1, ce type de ralentisseur étant connu sous la marque déposée "FOCAL".

Ces différents éléments vont maintenant être décrits plus en détail.

S'agissant tout d'abord de la boîte de vitesses 1, celle-ci est délimitée extérieurement par un carter 3 qui comprend d'une part un corps principal 4 et d'autre part une plaque de fermeture frontale 5.

La plaque de fermeture 5 ne présente pas de partie de support spécialement conçue pour le montage du ralentisseur électrique, et de façon plus générale, elle est conçue indépendamment de la présence ou non du ralentisseur électrique.

Cette plaque de fermeture 5 est fixée de façon étanche sur le corps principal 4 du carter au moyen de vis 6 qui traversent des trous 7 ménagés dans ladite plaque de fermeture et qui sont vissées dans le corps principal 4.

La plaque de fermeture 5 est disposée dans un plan général perpendiculaire à l'axe X et elle présente un nez central annulaire 5a qui fait saillie vers l'extérieur. Ce nez central 5a est traversé par l'arbre de sortie 2, et il reçoit en outre le manchon 13 de la fourche 12.

Par ailleurs, au voisinage de ce nez central 5a, l'arbre de sortie 2 est supporté par un palier d'extrémité constitué par un roulement 8 qui est standard et qui est dimensionné indépendamment de la présence ou non du ralentisseur électrique 20.

En ce qui concerne le ralentisseur électrique 20, celui-ci comprend, de façon connue en soi, un rotor induit 21 qui tourne avec l'arbre 2 et un stator inducteur 22 fixe comportant des bobines électromagnétiques 23 qui, lorsqu'elles sont parcourues par un courant électrique, génèrent des courants de Foucault dans le rotor 21, de sorte que ce rotor exerce un couple de freinage sur l'arbre 2.

Les bobines 23 du stator sont en nombre pair, et elles comportent chacune un noyau ferromagnétique (non représenté) qui s'étend longitudinalement parallèlement à l'axe X entre deux pôles 24. L'ensemble des pôles 24 forme deux couronnes centrées sur l'axe X, les pôles 24 de chaque couronne étant alternativement orientés Nord et Sud.

Les bobines 23 et leurs noyaux sont portés par un flasque 25 rigide en matériau amagnétique, qui présente une forme sensiblement annulaire et qui est lui-même fixé par des vis 26 à quatre bras 28 d'une ossature 27.

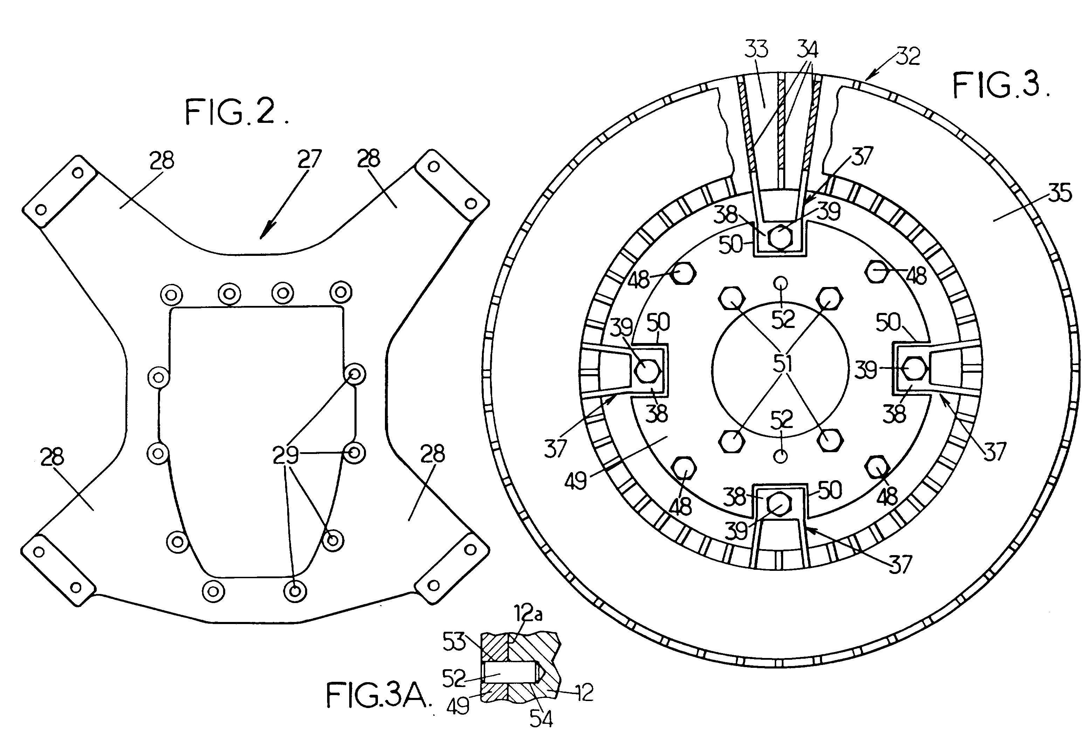

L'ossature 27, qui est bien visible sur les figures 1 et 2, est une pièce rigide qui peut être réalisée par exemple en fonte de type GS et qui présente des trous 29 en correspondance avec les trous 7 de la plaque de fermeture.

Ces trous 29 sont traversés par les vis 6 susmentionnées, dont les têtes s'appuient sur la face extérieure de l'ossature 27 pour fixer simultanément cette ossature et la plaque de fermeture 5 au corps principal 4 du carter, de sorte que la plaque de fermeture 5 est serrée entre l'ossature 27 et le corps principal 4.

Afin de permettre ce serrage dans de bonnes conditions, il serait éventuellement possible d'interposer des cales entre la plaque de fixation 5 et l'ossature 27 au droit des vis 6.

Mais de préférence, on usine des surfaces d'appui 30 annulaires, parfaitement planes et parfaitement perpendiculaires à l'axe X, sur la face extérieure de la plaque de fermeture 5 autour de chaque trou 7, et l'ossature 27 comporte pareillement des surfaces d'appui usinées 31 parfaitement planes et parfaitement perpendiculaires à l'axe X. Les surfaces d'appui 30 et 31 sont disposées en correspondance et sont en contact mutuel, en permettant un bon appui de l'ossature 27 sur la plaque de fermeture 5.

Par ailleurs, le rotor 21, qui est bien visible sur les figures 1 et 3, comprend deux roues 32 qui sont disposées chacune dans un plan radial et qui sont réalisées en matériau ferromagnétique, généralement en acier.

Chacune des roues 32 comporte un disque annulaire 33 relativement épais qui est disposé face à l'une des couronnes de pôles 24 du stator, un entrefer de faible épaisseur (par exemple de 1 à 3 mm) étant laissé libre entre ce disque 33 et les pôles 24 correspondants.

Chaque disque 33 est solidaire d'une couronne d'aubages 34 formant ailettes de refroidissement, qui s'étendent tous dans le plan radial de la roue 32 correspondante.

De plus, dans l'exemple représenté sur les dessins, ces aubages s'étendent chacun dans une direction radiale, mais ils pourraient éventuellement s'étendre chacun dans une direction inclinée par rapport à la direction radiale, tout en restant dans le plan radial de leur roue 32.

Sur la face de chaque roue 32 qui est la plus éloignée du stator, les aubages 34 sont en outre entretoisés par un disque annulaire 35 relativement mince.

Ce disque 35 délimite ainsi avec le disque épais 33 un espace annulaire dans lequel sont disposés les aubages 34 et dans lequel est canalisé l'air de refroidissement des roues 32.

Par ailleurs, chaque roue 32 du rotor est montée à une extrémité axiale d'un tube intercalaire 36 en acier qui présente une forme générale cylindrique de révolution centrée sur l'axe X.

Afin de réaliser ce montage, chaque roue 32 du rotor comporte quatre bras de fixation 37 qui sont disposés à 90 degrés les uns des autres et qui sont constitués chacun par deux aubages 34 prolongés vers l'intérieur jusqu'à une platine de fixation 38 elle-même fixée au tube intercalaire 36 par une vis 39 parallèle à l'axe X.

Dans l'exemple représenté sur la figure 3, les deux aubages 34 qui forment chaque bras de fixation 37 sont séparés l'un de l'autre par un aubage 34 non prolongé radialement vers l'intérieur, mais cette disposition n'est pas limitative.

Les bras de fixation 37 s'étendent dans le plan radial de leur roue 32, sans s'étendre en biais axialement vers le plan médian du ralentisseur, comme c'était le cas dans les ralentisseurs électriques de l'art antérieur : il en résulte une plus grande facilité de réalisation des roues 32, notamment lorsque ces roues sont obtenues par moulage.

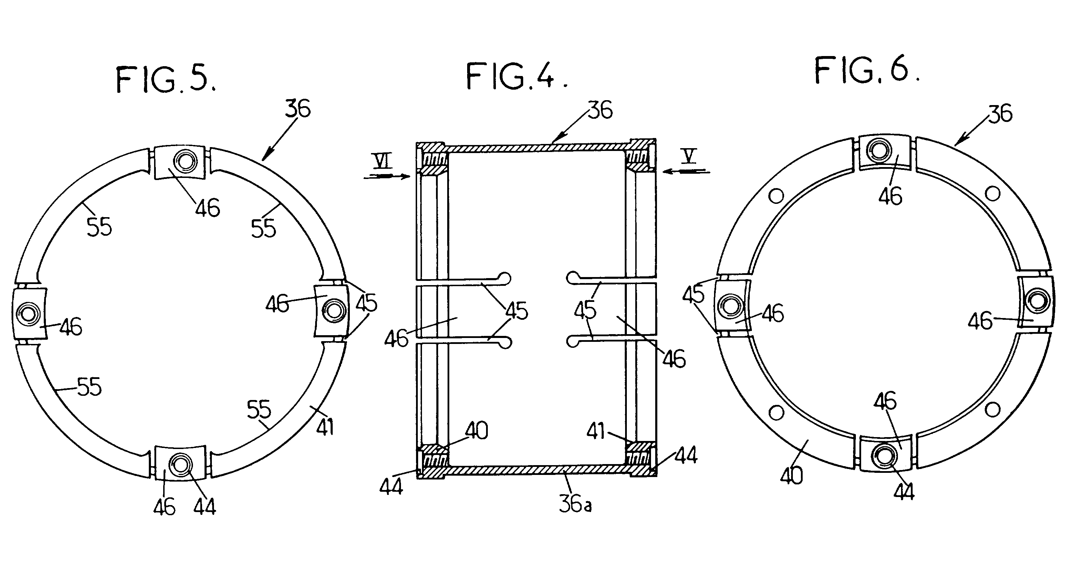

Par ailleurs, le tube intercalaire 36, qui est représenté en détail sur les figures 4 à 6, présente à ses deux extrémités axiales des première et deuxième brides sensiblement annulaires, respectivement 40, 41, dans lesquelles sont vissées les vis 39 permettant de fixer les roues 32.

Afin de limiter au maximum les jeux angulaires de montage des roues 32 sur ces brides, les vis 39 traversent des bagues 42 en acier qui sont chacune emboîtées à force à la fois dans un alésage 43 appartenant à la platine 38 correspondante, et dans un alésage 44 appartenant à la bride 40, 41 correspondante.

De plus, le tube intercalaire 36 comporte de préférence des fentes 45 qui s'étendent axialement vers l'intérieur du tube à partir de l'une ou l'autre des deux extrémités de ce tube, chaque fente 45 s'étendant sur moins de la moitié de la longueur axiale du tube, par exemple sur environ 1/3 de la longueur du tube.

Les fentes 45 sont disposées par paires en encadrant chaque vis 39, et en délimitant ainsi aux deux extrémités du tube 36 des lames 46 axiales aux extrémités desquelles sont fixés les bras 37 des roues 32.

Ces lames métalliques 46 sont suffisamment résistantes pour ne pas se déformer sensiblement sous l'effet des sollicitations extérieures subies par les roues 32, notamment :
- le poids des roues 32 (par exemple, environ 30 kg par roue),
- les sollicitations dynamiques verticales dues au roulement du véhicule, qui peuvent se traduire par exemple par une accélération allant jusqu'à 2 à 3 G suivant les cas d'utilisation,
- le couple de freinage obtenu lors du fonctionnement du ralentisseur électrique, ce couple pouvant valoir par exemple environ 2 000 à 2 500 Nm,
- et la force d'attraction magnétique subie par les roues 32 en direction des pôles 24, cette force pouvant dépasser par exemple une tonne, suivant la valeur de l'entrefer.

Par contre, les lames métalliques 46 sont dimensionnées pour pouvoir se déformer élastiquement radialement vers l'extérieur lorsque les roues 32 du rotor sont soumises à des dilatations thermiques du fait des hautes températures auxquelles elles peuvent être portées lors du fonctionnement du ralentisseur, ce qui compense l'absence de déformabilité radiale des bras de fixation 37.

Le cas échéant, les bras de fixation 37 pourraient d'ailleurs éventuellement être conçus pour pouvoir se déformer radialement. Cette déformabilité peut être obtenue par exemple en donnant une courbure suffisante aux prolongements des aubages 34 qui constituent les bras de fixation 37, lesquels bras de fixation restent de préférence situés dans le plan radial de leur roue 32.

Par ailleurs, les aubages 34 qui se prolongent radialement vers l'intérieur pour former les bras de fixation 37 présentent de préférence chacun un rétrécissement 47 selon la direction de l'axe X, entre le disque 33 et la platine 38 correspondante.

Ce rétrécissement 47 permet de diminuer la rigidité des bras 37 en flexion, ce qui limite les contraintes dues aux déformations thermiques des pièces.

Enfin, la première bride 40 du tube intercalaire 36 est fixée à un plateau 49 en acier par quatre vis 48, décalées angulairement de 45 degrés par rapport aux vis 39.

Ce plateau 49 est situé sensiblement dans le même plan radial que les platines 38 de fixation des roues 32, et il présente des encoches extérieures 50 pour laisser le passage auxdites platines 38.

Le plateau 49 est fixé au moyen de vis 51 sur la face arrière 12a de la fourche 12 du joint de cardan, dans un espace annulaire libre entre la fourche 12 et la plaque de fermeture 5.

La face arrière 12a est formée par un épaulement extérieur présenté par la fourche 12, et cette face arrière est de préférence usinée pour être parfaitement plane et parfaitement perpendiculaire à l'axe X.

Afin de garantir un montage sans jeu angulaire du plateau 49 sur la fourche 12, les vis 51 sont avantageusement complétées par des chevilles métalliques 52 emboîtées à force à la fois dans un alésage 53 qui traverse axialement le plateau 49 et dans un alésage borgne 54 qui pénètre dans la fourche 12 à partir de sa face arrière 12a (voir figure 3A).

On notera que le tube intercalaire 36 décrit ci-dessus permet de limiter efficacement l'encombrement diamétral du ralentisseur électromagnétique.

En effet, la partie centrale 36a de ce tube intercalaire, qui est comprise axialement entre les deux brides 40, 41, peut être située radialement très près des bobines 23, puisque les bras de fixation 37 des deux roues 32 ne viennent pas se rejoindre au centre des couronnes de bobines 23, au contraire des dispositifs de l'art antérieur.

En outre, du fait que la partie centrale 36a du tube intercalaire doit supporter seulement une roue 32 et non deux, cette partie centrale peut être relativement mince et présenter par exemple une épaisseur de l'ordre de 6 mm.

De plus, les brides 40, 41 du tube intercalaire 36 sont disposées radialement vers l'intérieur de la partie centrale 36a de ce tube, de sorte que le tube intercalaire ne présente sensiblement pas de partie faisant saillie vers l'extérieur, ce qui permet tout à la fois une introduction aisée du tube intercalaire 36 à l'intérieur de la couronne de bobines 23 malgré le faible jeu radial existant entre ce jeu et cette couronne, et d'autre part de limiter l'encombrement radial du tube intercalaire.

Le fait que les brides 40, 41 soient disposées vers l'intérieur du tube intercalaire ne gène en rien le fonctionnement du joint de cardan 10, dans la mesure où la bride 40 est solidaire de la fourche 12 de ce joint, tandis que la bride 41 est située axialement au-delà de l'autre fourche 13 en l'éloignant de la boîte de vitesses, c'est-à-dire au droit de l'arbre 11, beaucoup moins encombrant que le joint de cardan 10.

Enfin, pour limiter encore le jeu radial qui est nécessaire entre le joint de cardan 10 et la partie centrale 36a du tube intercalaire, la deuxième bride 41 de ce tube intercalaire présente vers l'intérieur des échancrures 55 dans ses portions intermédiaires entre les lames déformables 46.

Ainsi, on peut monter à l'intérieur du tube intercalaire 36 un gros joint de cardan, en passant les branches du croisillon 15 du joint de cardan et les deux fourches 12, 14 de ce joint de cardan dans les échancrures 55.

Le dispositif qui vient d'être décrit peut être entièrement réalisé en usine lors du montage initial de la transmission, mais il peut également être réalisé par adaptation a posteriori du ralentisseur électrique sur une transmission déjà montée dans un véhicule.

Dans ce dernier cas, on procède de préférence comme suit :
- après démontage du joint de cardan 10, on enlève au moins certaines des vis de fixation 6 de la plaque de fermeture 5,
- on usine les surfaces d'appui 30 sur la face extérieure de la plaque de fermeture 5,
- on remplace les vis 6 initiales par des vis de fixation 6 plus longues, et on fixe l'ossature 27 au carter au moyen de ces nouvelles vis, en serrant simultanément la plaque de fermeture 5 entre l'ossature 27 et le corps principal 4 du carter,
- on usine la face arrière 12a de la fourche 12, de façon qu'elle présente une surface parfaitement plane et perpendiculaire à l'axe X,
- on perce des trous filetés dans la fourche 12 à partir de sa face arrière,
- on engage la fourche 12 à l'intérieur du tube intercalaire 36 préalablement fixé au plateau 49, et on fixe la fourche 12 au plateau 49 au moyen des vis 51,
- on perce simultanément dans le plateau 49 et dans la fourche 12 les alésages 53, 54, puis on emboîte à force les chevilles métalliques 52 dans ces alésages, on remonte la fourche 12 sur l'arbre de sortie 2 de la boîte de vitesses, et on monte simultanément le flasque 25 du stator sur l'ossature 27 au moyen des vis 26,
- et enfin, on remonte complètement le joint de cardan 10 et l'arbre 11.

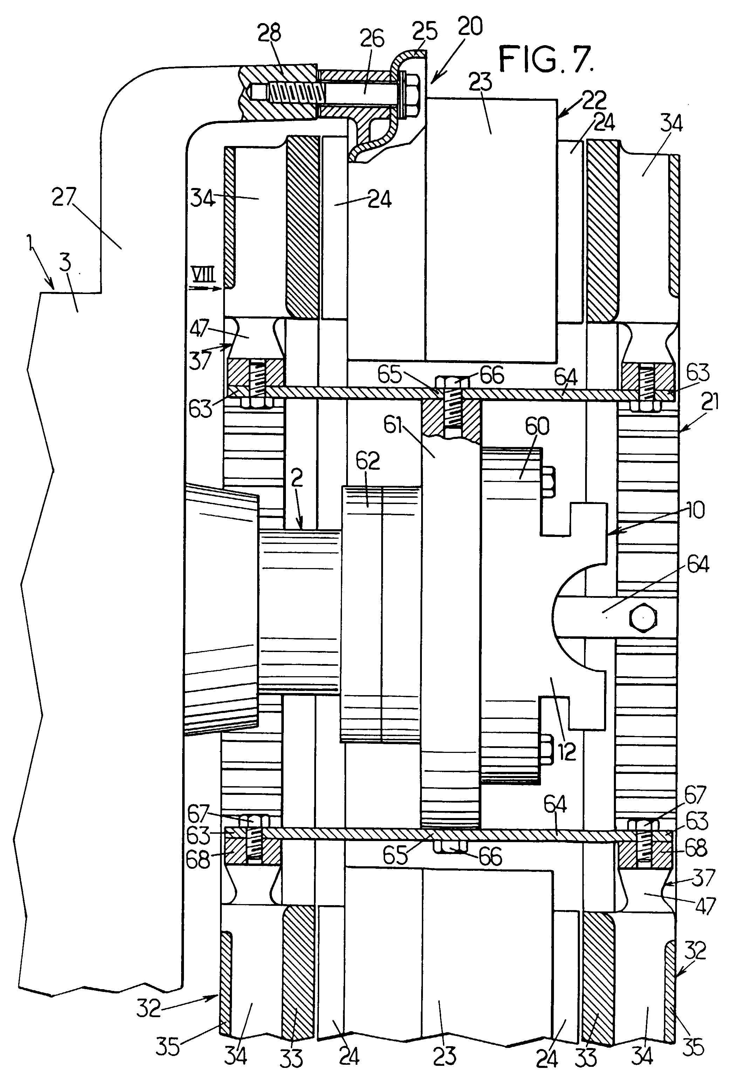

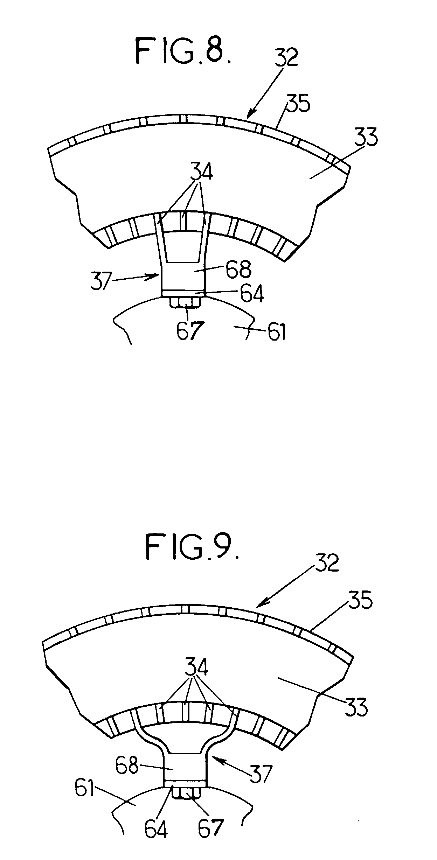

Les figures 7 et 8 représentent une deuxième forme de réalisation de l'invention qui, comme la première forme de réalisation de l'invention, présente une boîte de vitesses 1 sur laquelle est monté en porte-à-faux un ralentisseur électrique 20, l'arbre de sortie 2 de la boîte de vitesses entraînant comme précédemment un joint de cardan 10 dont seule la fourche arrière 12 est représentée.

Ces différents éléments sont similaires à ceux déjà décrits en regard des figures 1 à 6, de sorte qu'ils ne seront pas décrits à nouveau en détail ici.

La forme de réalisation des figures 7 et 8 se distingue de la forme de réalisation des figures 1 à 6 par les points suivants :
- la fourche 12 du joint de cardan 10 n'est pas emmanchée directement sur un bout d'arbre cannelé de la boîte de vitesses 1, mais elle présente une bride 60 qui est fixée sur un plateau intercalaire radial 61, lui-même fixé sur une bride de sortie 62 solidaire de l'arbre de sortie 2 de la boîte de vitesses ;
- les quatre bras de fixation 37 des roues 32 ne sont pas fixés sur un tube intercalaire, mais aux extrémités libres 63 de quatre lames en acier 64 indépendantes et aplaties dans le sens radial.

Chacune des quatre lames 64 présente une partie centrale 65 qui est fixée rigidement à la périphérie du disque intercalaire 61 au moyen d'une vis 66, et elle s'étend longitudinalement parallèlement à l'axe de rotation X entre ses deux extrémités libres 63.

Le montage de chaque bras de fixation 37 sur l'extrémité libre 63 de la lame 64 correspondante peut être réalisé par exemple au moyen d'une vis 67 qui traverse la lame 64 et qui se visse dans un bloc rigide 68 solidaire de l'extrémité intérieure du bras de fixation 37.

Comme dans la forme de réalisation des figures 1 à 6, les lames en acier 64 sont suffisamment résistantes pour ne pas se déformer sensiblement sous l'effet des sollicitations extérieures subies par les roues 32.

Par contre, ces lames métalliques 64 sont dimensionnées pour pouvoir se déformer élastiquement radialement vers l'extérieur lorsque les roues 32 du stator sont soumises à des dilatations thermiques du fait des hautes températures auxquelles elles peuvent être portées lors du fonctionnement du ralentisseur.

Dans tous les cas de figure, les bras de fixation 37 de chaque roue 32 s'étendent sensiblement dans un même plan radial.

De plus, les parties des aubages 34 qui se prolongent radialement vers l'intérieur pour fermer chaque bras de fixation 37 peuvent éventuellement s'étendre chacune dans une direction radiale, ce qui simplifie particulièrement la réalisation des roues 32. Dans ce cas, les bras de fixation 37 ne présentent aucune déformabilité radiale, de sorte que toutes les déformations radiales des disques induits 33 dues aux dilatations thermiques sont reprises par les lames en acier 64.

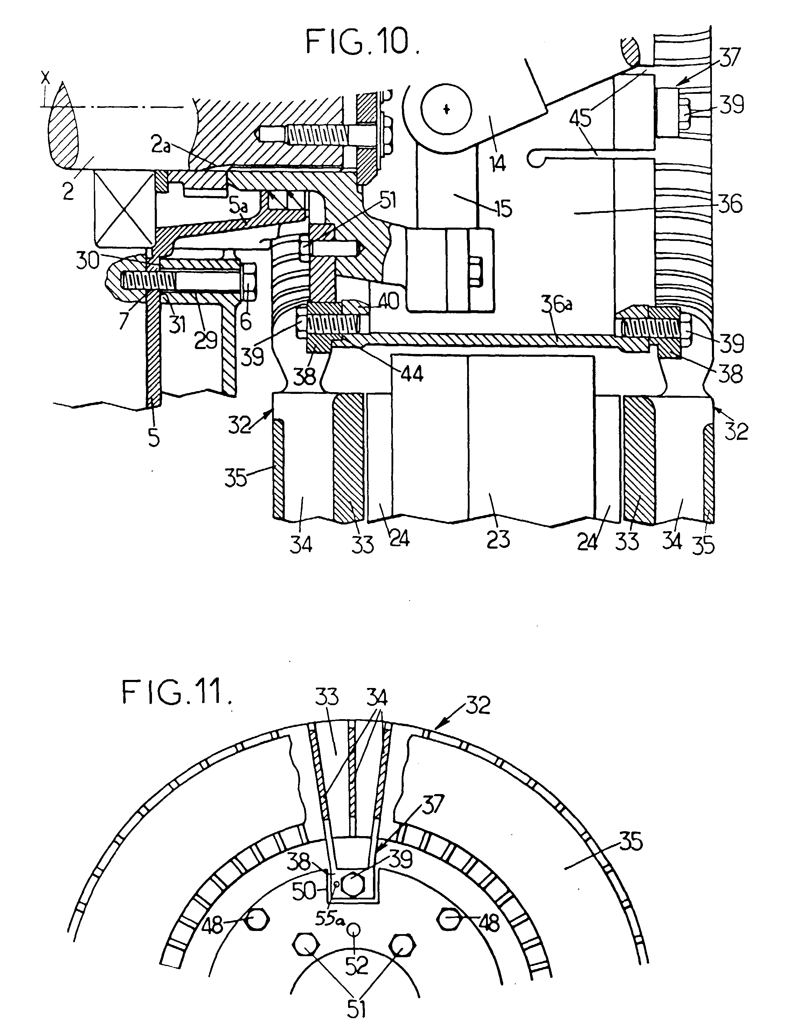

Le cas échéant, comme représenté sur la figure 9, les parties des deux aubages 34 qui se prolongent radialement vers l'intérieur pour former chaque bras de fixation 37 pourraient éventuellement ne pas être radiales et rectilignes, mais présenter au contraire une courbure suffisante pour permettre une certaine déformabilité radiale du bras de fixation 37 correspondant, tout en restant dans le plan radial de la roue 32, ce qui permet une fabrication encore relativement aisée de ladite roue 32. Dans ce cas, les déformations radiales des disques induits 33 sont reprises d'une part par les lames en acier 64, et d'autre part par les bras de fixation 37.

On notera que, dans la forme de réalisation des figures 1 à 5, les bagues 42 servant au montage des roues 32 pourraient être avantageusement supprimées, comme représenté sur les figures 10 et 11.

Dans ce cas, on prévoit de préférence des chevilles métalliques 55a qui sont disposées à côté d'au moins certaines des vis 39 et qui sont emboîtées à force à la fois dans la platine 38 correspondante et dans la bride 40, 41 correspondante.

## Revendications

1. Transmission pour véhicule terrestre à moteur, comprenant un arbre (2) rotatif autour d'un axe (X) et un ralentisseur électrique (20) à courants de Foucault qui comporte lui-même un stator inducteur (22) annulaire et un rotor (21), ce rotor incluant au moins une roue (32) qui est solidaire de l'arbre (2), laquelle roue comporte une couronne induite (33, 34, 35) qui s'échauffe en subissant des dilatations thermiques pendant le fonctionnement du ralentisseur et qui comprend elle-même un disque induit (33) annulaire en matériau ferromagnétique, ce disque induit étant disposé en regard du stator et étant solidaire d'une pluralité d'aubages (34) formant ailettes de refroidissement, la roue (32) comportant en outre au moins trois bras de fixation (37) qui s'étendent chacun vers l'intérieur depuis une extrémité extérieure solidaire de la couronne induite (33, 34, 35) jusqu'à une extrémité intérieure (38, 68) reliée à l'arbre (2), chaque bras de fixation étant libre de toute liaison mécanique entre ses extrémités intérieure et extérieure,
**caractérisée en ce que** l'extrémité intérieure (38, 68) de chaque bras de fixation est reliée à l'arbre (2) par l'intermédiaire d'une lame métallique (46, 64) qui est aplatie en direction radiale et qui s'étend longitudinalement parallèlement à l'axe de rotation (X) au moins entre d'une part une zone de fixation (36, 65) solidarisée à l'arbre (2) et d'autre part une extrémité libre fixée à l'extrémité intérieure (38, 68) du bras de fixation considéré, les différentes lames métalliques (46, 64) étant déformables élastiquement en direction radiale lorsque la couronne induite (33, 34, 35) subit des dilatations thermiques.

2. Transmission selon la revendication 1, dans laquelle chaque bras de fixation (37) présente une certaine largeur parallèlement à l'axe de rotation (X), et comporte un rétrécissement (47) où cette largeur est réduite.

3. Transmission selon l'une quelconque des revendications 1 et 2, comprenant en outre un tube (36) métallique qui s'étend longitudinalement parallèlement à l'axe de rotation (X) entre deux extrémités et qui est solidaire de l'arbre (2), les lames métalliques (46) étant découpées axialement à au moins une des extrémités de ce tube, et chaque lame métallique (46) présentant une extrémité axiale solidaire dudit tube (36).

4. Transmission selon la revendication 3, comportant en outre un mécanisme de transmission (1) entraîné par le moteur du véhicule et présentant un carter (3) sur lequel le stator (22) du ralentisseur électrique est monté en porte-à-faux, le mécanisme de transmission (1) incluant également l'arbre (2) susmentionné et cet arbre étant relié à un joint de cardan (10) qui est disposé à l'intérieur du tube (36), le rotor (21) comportant quant à lui deux roues (32) qui encadrent axialement le stator, les lames métalliques (46) sur lesquelles sont montées ces roues étant découpées aux deux extrémités du tube, l'une des extrémités de ce tube présentant des zones de fixation qui sont disposées angulairement entre les lames métalliques (46) et qui sont fixées à une bride (49) solidaire de l'arbre (2).

5. Transmission selon la revendication 4, dans laquelle le mécanisme de transmission (1) est une boîte de vitesses.

6. Transmission selon l'une quelconque des revendications précédentes, dans laquelle les bras de fixation (37) de chaque roue (32) du rotor s'étendent selon un même plan radial.

7. Transmission selon la revendication 6, dans laquelle chaque bras de fixation (37) s'étend selon une direction sensiblement radiale.

8. Transmission selon la revendication 6, dans laquelle chaque bras de fixation (37) est courbe, de façon à présenter une certaine déformabilité élastique en direction radiale.

## Patentansprüche

1. Getriebe für ein motorisiertes Landfahrzeug, umfassend eine Welle (2), die sich um eine Achse (X) dreht, und einen elektrischen Wirbelstromretarder, der selbst einen ringförmigen Stator-Induktor (22) und einen Rotor (21) umfaßt, wobei dieser Rotor wenigstens ein Rad (32) umfaßt, das mit der Welle (2) fest verbunden ist, wobei dieses Rad einen Ringläufer (33, 34, 35) umfaßt, der sich erhitzt, während er thermische Ausdehnungen beim Betrieb des Retarders erfährt, und der selbst einen ringförmigen Scheibenläufer (33) aus ferromagnetischem Material umfaßt, wobei dieser Scheibenläufer gegenüber dem Stator angeordnet und mit einer Vielzahl von Schaufeln (34) fest verbunden ist, die Kühlrippen bilden, wobei das Rad (32) außerdem wenigstens drei Befestigungsarme (37) umfaßt, von denen sich jeder ins Innere von einem außen liegenden, mit dem Spulenläufer (33, 34, 35) fest verbundenen Ende bis hin zum innen liegenden Ende (38, 68) erstreckt, das mit der Welle (2) verbunden ist, wobei jeder Befestigungsarm frei von jeglicher mechanischer Verbindung zwischen seinen inneren und äußeren Enden ist,
**dadurch gekennzeichnet, daß** die inneren Enden (38, 68) jedes Befestigungsarmes mit der Welle (2) mit Hilfe von einer metallischen Lamelle (46, 64) verbunden ist, die in radialer Richtung flach ist und sich in Längsrichtung parallel zur Rotationsachse (X) zumindest einerseits zwischen einem Befestigungsbereich (36, 65), der an der Welle (2) befestigt ist, und andererseits einem freien Ende erstreckt, das an dem inneren Ende (38, 68) des in Betracht stehenden Befestigungsarmes befestigt ist, wobei die unterschiedlichen metallischen Lamellen (46, 64) in radialer Richtung elastisch verformbar sind, während der Ringläufer (33, 34, 35) die thermischen Ausdehnungen erfährt.

2. Getriebe nach Anspruch 1, bei dem jeder Befestigungsarm (37) eine gewisse Breite parallel zur Rotationsachse (X) aufweist und ein Verengung (47) umfaßt, wo diese Breite verkleinert ist.

3. Getriebe nach einem der Ansprüche 1 und 2, umfassend außerdem ein metallisches Rohr (36), das sich in Längsrichtung parallel zur Rotationsachse (X) zwischen zwei Enden erstreckt und das mit der Welle (2) fest verbunden ist, wobei die metallischen Lamellen (46) axial an wenigstens einem der Enden dieses Rohres ausgestanzt sind und jede metallische Lamelle (46) ein axiales, mit dem Rohr (36) fest verbundenes Ende aufweist.

4. Getriebe nach Anspruch 3, umfassend außerdem eine Getriebeeinrichtung (1), die von dem Fahrzeugmotor angetrieben ist, und ein Gehäuse (3), an dem der Stator (22) des elektrischen Retarders fliegend gelagert ist, wobei die Getriebeeinrichtung (1) ebenso die oben erwähnte Welle einschließt und diese Welle mit einem Kardan-Gelenk (10) verbunden ist, das im Inneren des Rohres (36) angeordnet ist, wobei der Rotor (21) ihn betreffend zwei Räder (32) umfaßt, die axial den Stator einrahmen, wobei die metallischen Lamellen (46), an denen diese Räder befestigt sind, an zwei Enden des Rohres ausgestanzt sind, wobei eines der Enden dieses Rohres Befestigungsbereiche aufweist, die winklig zwischen den metallischen Lamellen (46) angeordnet und an einem Flansch (49) befestigt sind, der mit der Welle (2) fest verbunden ist.

5. Getriebe nach Anspruch 4, bei dem die Getriebeeinrichtung (1) ein Schaltgetriebe ist.

6. Getriebe nach einem der vorangegangenen Ansprüche, bei dem sich die Befestigungsarme (37) jedes Rades (32) des Rotors in einer gemeinsamen, radialen Ebene erstrecken.

7. Getriebe nach Anspruch 6, bei dem sich jeder Befestigungsarm (37) in einer im wesentlichen radialer Richtung erstreckt.

8. Getriebe nach Anspruch 6, bei dem jeder Befestigungsarm (37) bogenförmig ist, um eine gewisse elastische Verformbarkeit in radialer Richtung aufzuweisen.

## Claims

1. A transmission system for a self-propelled land vehicle, the transmission system comprising a shaft (2) rotatable about an axis (X) together with an electrical eddy current retarder (20) itself comprising an annular inductor stator (22) and a rotor (21), said rotor including at least one wheel (32) secured to the shaft, which wheel includes a ring-shaped core (33,34,35) that heats and is subjected to thermal expansion during operation of the retarder, and that itself includes an annular core disk of ferromagnetic material, said core disk (33) being disposed facing the stator and being secured to a plurality of blades (34) forming cooling fins, the wheel further including at least three fixing arms (37) each extending inwards from an outer end secured to the ring shaped core (33,34,35) to an inner end (38,68) connected to the shaft, each fixing arm being free from any mechanical link between its inner and outer ends,
characterized in that the inner end (38,68) of each fixing arm is connected to the shaft (2) by means of a metal tongue (46,64) which is flat in the radial direction and which extends longitudinally parallel to the axis of rotation (X) at least between a fixing zone (36,65) secured to the shaft (2) and a free end fixed to the inner end (38,68) of the fixing arm in question, the various metal tongues being elastically deformable in the radial direction when the ring shaped core (33,34,35) is subjected to thermal expansion.

2. A transmission system according to claim 1, in which each fixing arm (37) has a certain width parallel to the axis of rotation (X), and includes a narrowing (47) where said width is reduced.

3. A transmission system according to anyone of claims 1 and 2, further including a metal tube (36) extending longitudinally parallel to the axis of rotation (X) between two ends and secured to the shaft (2), the metal tongues (46) being cut out axially in at least one of the ends of said tube, and each metal tongue having an axial end secured to said tube (36).

4. A transmission system according to claim 3, further including a transmission mechanism (1) driven by the engine of the vehicle, and presenting a case (3) from which the stator (22) of the electrical retarder is cantilevered out, the transmission system (1) also including the above-mentioned shaft (2) and said shaft being connected to a universal joint (10) disposed inside the tube (36), the rotor (21) including two wheels (32) axially on either side of the stator, the metal tongues (46) on which said wheels are mounted being cut out from the two ends of the tube, one of the ends of said tube having fixing zones which are disposed angularly between the metal tongues (46) and which are fixed to a flange (49) secured to the shaft (2).

5. A transmission system according to claim 4, in which the transmission mechanism (1) is a gear box.

6. A transmission system according to anyone of the preceding claims, in which the fixing arms (37) of each wheel (32) of the rotor extend in a common radial plane.

7. A transmission system according to claim 6, in which each fixing arm (37) extends in a direction that is substantially radial.

8. A transmission system according to claim 6, in which each fixing arm (37) is curved, so as to present a certain amount of elastic deformability in the radial direction.
